(19) **Europäisches Patentamt / European Patent Office / Office européen des brevets**

(11) **EP 1 829 019 B1**

(12) **EUROPEAN PATENT SPECIFICATION**

(45) Date of publication and mention
of the grant of the patent:
**30.03.2011 Bulletin 2011/13**

(51) Int Cl.:
***G09F 11/00*** (2006.01)    ***G06F 1/16*** (2006.01)

(21) Application number: **05849087.1**

(86) International application number:
**PCT/US2005/044339**

(22) Date of filing: **06.12.2005**

(87) International publication number:
**WO 2006/068843 (29.06.2006 Gazette 2006/26)**

(54) **COLOR-CHANGING ELECTRONIC SIGNAGE**

FARBWECHSELNDE ELEKTRONISCHE BESCHILDERUNG

SIGNALISATION ELECTRONIQUE A CHANGEMENT DE COULEURS

(84) Designated Contracting States:
**DE FR GB**

(30) Priority: **21.12.2004 US 21766**

(43) Date of publication of application:
**05.09.2007 Bulletin 2007/36**

(73) Proprietor: **Industrial Technology Research Institute**
**Hsinchu 31040 (TW)**

(72) Inventors:
• **RICKS, Theodore, Kenneth**
**Rochester, New York 14626 (US)**
• **WEINER, Megan, Lyn**
**Rochester, New York 14617 (US)**

(74) Representative: **Derks, Wilbert et al**
**Howrey LLP**
**Rembrandt Tower**
**Amstelplein 1, 31st Floor**
**1096 HA Amsterdam (NL)**

(56) References cited:
**US-A- 4 857 908     US-A- 5 105 185**
**US-A- 5 555 064     US-A1- 2004 212 582**

• **PATENT ABSTRACTS OF JAPAN vol. 1995, no. 05, 30 June 1995 (1995-06-30) -& JP 07 049984 A (SANYO ELECTRIC WORKS LTD), 21 February 1995 (1995-02-21)**

## Description

### FIELD OF THE INVENTION

The present invention relates to a rewritable, colored electronic display, and signage systems including such displays.

### BACKGROUND OF THE INVENTION

Electronic signs are becoming popular in retail stores in order to keep pricing and sale information as current as possible. For example, prices can be kept up-to-date without having to reprint new price sheets whenever there is a sale or price change. The customer benefits by having the up-to-date information they need about the product pricing, and the retailer benefits by having programmable information that can be readily changed by various electronic means. Electronic signage is also increasingly used in large displays, such as billboards.

Electronic signs have been made using traditional display technologies, such as cathode ray tubes (CRTs), liquid crystal displays (LCDs), or plasma displays. These technologies provide dynamic, full-co17lor imagery, but in return require complex, expensive electronics and constant power, increasing the weight, size, and cost of the signage including such displays. The advent of bistable, reflective display technology has enabled a new breed of electronic sign, which is capable of maintaining images indefinitely, without the constant application of power. Many bistable display technologies are well suited to reduced electronics in the form of a passive matrix drive system, or a direct drive system which utilizes an electronic "printhead" that is capable of updating a display medium as it is physically moved past the head. The use of reflective, bistable display technologies combined with either the electronic printhead or passive matrix systems, enables signage to be made with both reduced electronics and power consumption, and completely unique form factors.

Despite the many developments in display technologies, it is still very difficult to get high quality, changeable color from a display system, particularly reflective display systems. Color-change has only been possible on a full color system, wherein full color capabilities are added through the use of either red-green-blue color layer stacking or color filters. Both of these approaches raise the product cost due to increased electronics, added layers in the system, or both. Further, they can add additional weight and size to the system. Such systems further suffer from light loss because the use of multiple layers or color filters blocks out some of the light entering the system, reducing the overall brightness of the display, and typically producing poor colors.

There are systems that attempt to provide color to the display without the loss of brightness or reduction in color quality by offering bi-chromic, or two-color, display systems. Bi-chromic systems can be made with very high quality colors, excellent brightness, and good contrast. Typical bi-chromic color combinations, or "sets," are green and black, gray and blue, or black and white, but an almost infinite array of combinations is available. Bi-chromic systems enable the use of color, but once a particular color set has been selected for the display, it cannot be changed without physically changing the display.

Another method of applying more than one color to a display is the use of spot color. Spot color uses one color set for the majority of the display, but includes one or more areas of a different color set on the display. In some systems the spot color areas can be turned on and off, enabling a general appearance change to the display, but the additional color or colors are limited to the specific areas and color choices initially built into the display.

In US 2003/0071936, Niiyama et al. discloses the use of a color filter layer between two switchable layers. This system enables an entire display to be electronically switched from black and white, to a bright red (or other tri-color combinations). This is an improvement over the spot color in that the area of color is not limited, but it maintains the limitation of only having only two color set options, and it adds an entire layer of electronics.

Another option for a color changing display is to use mechanically indexed, scrolled paper. Scrolling displays offer an option for remotely changing the color of a sign, wherein one printed image is exchanged for a different printed image by scrolling through preprinted choices. A portion of a loop or scroll of material that is pre-printed with an array of images is viewed through a window. When a change in content or color is required, the system mechanically indexes the scroll to make a different portion visible in the window. This system enables an infinite array of high-quality colors to be used in an inexpensive system, but is not able to be remotely updated with new information. Once the scroll is printed, the information is set, and can only be changed by replacing the scroll with a new scroll.

There is a need for a display system that is remotely updatable, and that has the ability to remotely select from a variety of high-quality colors. Desirably, the display could also be bistable, and could have one or more of minimum weight, size, cost or power requirements.

the display could also be bistable, ad could have one or more of minimum weight, size, cost or power requirements.

JP07049984 discloses a display device for a vehicle that can display change of the destination of the vehicle and can show the operation form of the vehicle in addition to station names. Disclosed is a recording sheet prepared opposite to a display window in an up-down movable way. The sheet contains a reversible heat sensitive recording medium of a leuco dyestuff type attached on a resin film of a white ground. The display areas are arrayed on the sheet in its lengthwise direction. Then the areas generate the green, black and red colors respectively. Thus the sheets generate images with colors generated by a thermal head and show the destinations, etc. These displayed images and destinations are erased by a heating roll.

US 4,857,908 discloses an image display device in which image data produced by an image scanner separate from the display may be written and erased. The display consists of a movable endless belt. Four embodiments are shown with the belt being made of an electrochromic material which electrochemically shows oxidation-reduction reactions; an optically reversible photochromic material; a thermoplastic sheet produced by applying a photoconductor and a thermoplastic resin to a transparent conductive film; and a color photochromic sheet made up of a photochromic film whose absorption changes when illuminated by light of predetermined wavelengths and a repetitive sequence of color filters of red, green and blue each being formed in a stripe configuration, respectively. Visible images are displayed on the display member based on the image data.

US2004/0212582 discloses an electronic display system that includes one or more electronic display apparatuses wired or wirelessly connected to a network central processor. Each electronic display apparatus further includes a receiver unit, a processor unit, a content database, driver circuitry, a printhead, and an electronic display. The electronic display is typically a passive monochrome or full color display that is electrically writable and erasable and retains its image until erased and re-written by another transmission. In an alternative embodiment, electronic display is a passive full-color display that is likewise electrically writable and erasable and retains its image until erased and re-written by another transmission.

US 5 105 185 discloses a display device including a case with a viewing window and a scrollable, rewritable, electronically updatable liquid crystal display medium, which is arranged in the case. The display medium is movable relative to the viewing window. The display medium comprises a polymer-dispersed-liquid-crystal layer bistably switchable between a white scattering state and a transparent state. The display medium further has coloured charge generating layer that serves as a coloured background layer, and that is optically addressed by an optical writehead.

## SUMMARY OF THE INENTION

In accordance with the claimed invention there is provided an electronically updatable display according to claim 1.

## ADVANTAGES

The electronically updatable, color-changing display can be used to display images in a variety of high-quality colors, wherein both the content and color of the image can be updated remotely. The system can change the color of all or a portion of the display, and can enable multiple viewing areas of the display to be the same or different colors. The system can provide high quality color. The system can use minimal power. The system can be lightweight, small, have a reduced cost, or a combination thereof.

## BRIEF DESCRIPTION OF THE DRAWINGS

The invention as described herein can be understood with reference to the accompanying drawings as described below:

Figs. 1a and 1b are schematic front views of a display featuring a stationary medium with areas of two color sets and a single, movable view area;
Fig. 2a is a front view of a one-sided, color-changing display featuring a movable medium, a stationary view area, and a first color set visible;
Fig. 2b is a cross-sectional view of Fig 2a;
Fig. 3a is a front view of the one-sided, color-changing display of Fig. 2a with portions of the first and second color set visible;
Fig. 3b is a cross-sectional view of Fig 3a;
Fig. 4a is a front view of the one-sided, color-changing display of Fig. 2a with the second color set visible;
Fig. 4b is a cross-sectional view of Fig 4a;
Fig. 5a is a front view of a two-sided, color-changing display featuring a movable medium, a stationary view area, and the second color set visible;
Fig. 5b is a cross-sectional view of Fig 5a;
Fig. 5c is a back view of the two-sided, color-changing display of Fig. 5a with the second color set visible;
Fig. 6a is a front view of the two-sided, color-changing display of Fig. 5a with the second color set visible;
Fig. 6b is a cross-sectional view of Fig 6a;
Fig. 6c is a back view of the two-sided, color-changing display of Fig. 6a with the first color set visible;
Fig. 7a is a front view of a single-sided, color-changing display featuring a movable, translucent medium, a stationary view area, and a first color set, and a second color set, wherein a combination of the first and second color sets is visible; and
Fig. 7b is a cross-sectional view of Fig 7a.

The drawings are exemplary only, and depict various embodiments of the invention. Other embodiments will be apparent to those skilled in the art upon review of the accompanying text.

## DETAILED DESCRIPTION OF THE INVENTION

An electronic, rewritable display can be used in a signage system. The display can include one or more sheets of display medium capable of displaying an electronically updateable image. The display medium can include two or more areas, each featuring a different combination of two or more colors, hereafter referred to as a "color set." As used herein, "medium" can refer to a single piece of medium having two or more color sets, or multiple pieces of a medium, wherein each piece of medium has one or more color sets. The medium pieces can be spatially separated, joined, butted, or overlapped. An image can be produced on the display by setting one or more area of the display to a first color on a first section of medium, and remaining areas of the display to a different color. One portion of the display medium can be completely or partially transparent. The display includes a case, which enables only a portion of the medium to be visible at a given time. The area of the display medium that is visible at any given time is hereafter referred to as the "view area." The perceived color of the display can be changed by changing the portion of the display medium that is visible in the view area. The perceived color of the display can be electronically selectable by incorporating an automated system for moving the media relative to one or more view areas. The display medium or the view area can be movable. The portion of the medium visible in the view area can contain all or a portion of one or more color sets.

The display medium can be completely written using permanently attached drive electronics, or can be written in portions by a writehead capable of moving relative to the media. The information written to the display medium can be viewed from one or more view directions. The medium can be in the form of a sheet, loop, scroll, or any other arrangement.

The display includes rewritable, electronic display medium. The display medium according to the claimed invention includes bistable liquid crystal materials. The bistable liquid crystal materials can be twisted nematic (TN), super-twisted nematic (STN), ferroelectric, magnetic, or chiral nematic liquid crystal materials. Chiral nematic liquid crystals can be polymer dispersed liquid crystals (PDLC). Suitable chiral nematic liquid crystal materials include a cholesteric liquid crystal disclosed in U.S. Patent 5,695,682, and Merck BL112, BL118 or BL126, available from EM Industries of Hawthorne, NY.

According to various embodiments, the display element can maintain a desired image, such as text, graphics, symbols, or characters, without power by using a bistable material. This reduces power requirements of the display, and can improve the life of the display where the display has a self-contained power source, such as by a battery. Bistable displays can be formed by methods known in that art of display making. Bistable materials include chiral nematic liquid crystal materials. The bistable material used in the invention is a liquid crystal material, and a support having a first conductive layer is coated with the bistable liquid crystal material or a preformed layer of the bistable liquid crystal material is placed over the first conductive layer. A second conductive layer is formed over the bistable liquid crystal material to provide for application of electric fields of various intensity and duration to the bistable liquid crystal material to change its state from a reflective state to a transmissive state, a transmissive state to a reflective state, or from any state to a desired grey scale level. The bistable liquid crystal material can maintain a given state indefinitely after the electric field is removed. According to various embodiments, two or more conductive layer are provided external to the bistable liquid crystal medium.

The first conductive layer is patterned, for example, into parallel lines. The second conductive layer can be patterned non-parallel to the patterning of the first conductive layer such that the intersection of the first conductive layer and the second conductive layer forms a pixel. The bistable liquid crystal material in the pixel changes state when an electric field is applied between the first and second conductive layers. The second conductive layer can be patterned in the form of individual pixels.

The second conductive layer can be electrically conductive segments formed over the bistable material layer by thick film printing, sputter coating, or other printing or coating means. The conductive segments can be any known aqueous conductive material, for example, carbon, graphite, or silver. An exemplary material is Electrodag 423SS screen printable electrical conductive material from Acheson Corporation. The conductive segments can be arranged to form pixels of any shape, numbers 0-9, a slash, a decimal point, a dollar sign, a cent sign, or any other character or symbol.

The optical state of the bistable liquid crystal material between the first conductive layer and the second conductive layer can be changed by selectively applying an electrical drive signal across the bistable material. This signal can be a voltage, current, or any combination thereof. The signal can be applied to the second conductive layer and to the first conductive layer by direct or indirect contact. For any conductive layer not present in the medium, the signal can be applied to selected areas of the bistable liquid crystal material through direct or indirect contact of one or more external electrode to the bistable liquid crystal material. Once the optical state of the bistable liquid crystal material has been changed, it can remain in that state indefinitely without further power being applied to the conductive layers. Methods of forming various bistable display elements are known to practitioners in the art. For example, bistable liquid crystal displays are taught in USSN 10/134,185, filed April 29, 2002 by Stephenson et al., and USSN 10/851,440 filed May 21, 2004, to Burberry et al.

Depending on the material selected for the display, color can be added through the use of filters, colored translucent polymeric films, and direct coloration of the display material by manipulation of the material or addition of colorants thereto. For a liquid crystal material, different colors can be achieved by adjusting the pitch of the liquid crystals, or by adding a colorant thereto.

Chiral nematic liquid crystal refers to the type of liquid crystal having finer pitch than that of twisted nematic and super twisted nematic liquid crystals. Chiral nematic liquid crystal formulations can be made by adding chiral agents to host nematic liquid crystals. Chiral nematic displays are bistable in the absence of a field, having two stable textures, a reflective planar texture and a weakly scattering focal conic texture. In the planar texture, the helical axes of the chiral nematic liquid crystal molecules are substantially perpendicular to the substrate upon which the liquid crystal is disposed. In the focal conic state, the helical axes of the liquid crystal molecules are randomly oriented. Adjusting the concentration of chiral dopants in the chiral nematic material can modulate the pitch length of the liquid crystals and affect the wavelength of radiation reflected, altering the observed color of the liquid crystal. The chiral dopant added to the liquid crystal can be chosen based on several characteristics, including chemical compatibility with the nematic host, helical twisting power, temperature sensitivity, and light fastness. Many chiral dopant classes are known, as taught, for example, in G. Gottarelli and G. Spada, Mol. Cryst. Liq. Crys., 123, 377 (1985), G. Spada and G. Proni, Enantiomer, 3, 301 (1998), and references cited therein. Chiral dopants can include 1,1-binaphthol derivatives; isosorbide and similar isomannide esters disclosed in U.S. Patent No. 6,217,792; TADDOL derivatives disclosed in U.S. Patent No. 6,099,751; and pending spiroindanes esters disclosed in U.S. Patent Application Serial Number 10/651,692 by T. Welter et al., filed August 29, 2003.

The pitch length of the liquid crystal materials can be adjusted based upon the following equation (1):

$$\lambda_{max} = n_{av}\, p_0$$

where $\lambda_{max}$ is the peak reflection wavelength, that is, the wavelength at which reflectance is a maximum, $n_{av}$ is the average index of refraction of the liquid crystal material, and $p_0$ is the natural pitch length of the chiral nematic helix. Definitions of chiral nematic helix and pitch length, and methods of measurement, are known to those skilled in the art, and can be found, for example, in L. M. Blinov, Electro-optical and Magneto-Optical Properties of Liquid Crystals, John Wiley & Sons Ltd., 1983. The pitch length can be modified by adjusting the concentration of the chiral material in the liquid crystal material. For most concentrations of chiral dopants, the pitch length induced by the dopant is inversely proportional to the concentration of the dopant. The proportionality constant is given by the following equation (2):

$$p_0 = 1/(HTP \cdot c)$$

where c is the concentration of the chiral dopant and HTP is the proportionality constant.

Alternately, a liquid crystal material layer can include a light absorbing colorant, for example, an absorber dye. The colorant can selectively absorb scattered light from the planar state or focal conic state. Colorants can include dyes, pigments, or a combination thereof. The colorant can absorb selected wavelengths of light, improving the display quality. One or more colorant can be present in the liquid crystal, a binder for the liquid crystal such as a polymer, or both. The colorant can be chosen to absorb light of shorter wavelengths than a selected reflection wavelength of the liquid crystal. Any amount of colorant can be used, so long as it does not interfere with the display capabilities of the liquid crystal material. For example, colorant can be added in an amount of from 0.1 weight % to 5 weight % of the liquid crystal material.

Suitable colorants can be miscible with the liquid crystal material. Examples of suitable colorants can include, but are not limited to, anthraquinone dyes such as Sandoplast Blue 2B from Clariant Corporation; phthalocyanine dyes such as Savinyl Blue GLS from Clariant Corporation or Neozapon Blue 807 from BASF Corporation; methine dyes such as Sandoplast Yellow 3G from Clariant Corporation; metal complex dyes such as Neozapon Yellow 157, Neozapon Orange 251, Neozapon Green 975, Neozapon Blue 807 or Neozapon Red 365 from BASF Corporation; and Neopen Blue 808, Neopen Yellow.075, Sudan Orange 220 or Sudan Blue 670 from BASF Corporation. Suitable colorants can also include various dyestuffs suitable for resin coloring and dichromatic liquid crystal display, such as SPR RED1 by Mitsui Toatsu Senryo Co., Ltd.; and SI-424 or M-483 by Mitsui Toatsu Senryo Co., Ltd. Other suitable colorants, including dyes and pigments, will be apparent to practitioners in the art.

A light absorbing material, called a dark layer, can be positioned on a side of the liquid crystal material opposing the incident light. In the fully evolved focal conic state the cholesteric liquid crystal is transparent, passing incident light, which is absorbed by the dark layer to provide a colored, typically black, image. The dark layer can be a radiation reflective layer or a radiation absorbing layer of any color, so long as it provides a contrast to the liquid crystal in the planar state. The dark layer can include milled nonconductive nanopigments having a diameter less than I micron. The dark layer can include multiple pigment dispersions. Pigments suitable for use in the dark layer can be any colored materials that are not soluble in the medium in which they are incorporated. Suitable pigments include those described in Industrial Organic Pigments: Production, Properties, Applications by W. Herbst and K. Hunger, 1993, Wiley Publishers. These include, but are not limited to, pigments including azo pigments such as monoazo yellow and orange, diazo pigments, naphthol pigments, naphthol reds, azo lakes, benzimidazolone pigments, diazo condensation pigments, metal complexes, isoindolinone and isoindolinic pigments, polycyclic pigments such as phthalocyanine, quinacridone pigments, perylene pigments, perinone pigments, diketopyrrolo-pyrrole pigments, thioindigo pigments, and anthriquinone pigments such as anthrapyrimidine.

Different color sets can be formed on the display medium by the material and color selection of the second conductive layer formed over the display material layer. For example, the use of carbon and silver conductive materials can result in different display medium color sets when used in combination with the same coated, chiral nematic liquid crystal dispersion and color contrast layer. By using different conductive layer materials, a single medium piece can be formed having two or more areas, at least two areas having different color sets.

Two or more display medium pieces, at least two of the medium pieces having different color sets, can be combined into a single medium piece by any joining means, for example, taping, splicing, gluing, stitching, clamping or stapling. Two or more medium pieces featuring different color sets can be joined in this manner to form a sheet, roll, or scroll having two or more areas of different color sets. A desired image can be formed on the display medium by selectively changing the optical state of portions or all of the display medium. Writing only portions of the display medium can be accomplished by an active or passive drive writing selected sections or all of the display medium, or by passing the display medium past one or more electrodes, hereafter referred to as a "writehead." The writehead can be designed to interact with the display medium to apply the appropriate drive signal to change selected areas of the display medium. The display medium and writehead can move relative to each another. The writehead can be sized to cover one dimension of the display medium, for example, the width of the medium, or two or more writeheads can be used together to cover the desired portion of the medium. The writehead can be made large enough to address the entire piece of medium at once, in which case relative motion of the writehead and medium is unnecessary, and the writehead can write all or a portion of the medium at a time, for example, by use of an active or passive drive matrix. The writehead can be permanently or removably attached to the medium.

The writehead can be aligned with a specific location on the medium; a fiducial on the medium; an aperture in the medium; a feature on or in a layer of the medium, for example, in the first or second conductor; or any other characteristic of the display medium. The electrodes can be on the view side, back side, or both sides of the medium. The writehead can be located on the view side of the medium, the back side of the medium, or both. The writehead can consist of two separate pieces when the writehead is located on both sides of the medium, wherein the pieces can move simultaneously relative to the medium. The writehead can be placed in direct or indirect contact with the conductive layers on the medium.

When it is desirable to update the image on the display, the writehead can be aligned with a desired area of the display medium, and the writehead can apply an appropriate drive signal to the display medium to change all or a portion of the display to the desired image. The accuracy of the written medium can be checked by an optical reader. The optical reader can be present on the medium, on the writehead, or attached to a case surrounding all or a portion of the display or display elements. When a writehead is used to address the medium, the medium and writehead can be moved relative to each other to allow the writehead to address various sections of the medium. The medium can form a loop, such that the writehead can continuously address the entire display. If the medium forms a scroll or sheet, the medium can include a block, or the writehead can include sensors to detect the beginning and ending of the medium, to prevent overdriving of the writehead.

The writehead drive signal can be provided by a display drive source, for example, a circuit board. The circuit board can be attached to the display medium or writehead. The display drive source can include an internal power source, such as a battery, or can be connected to an external power source, for example, a battery or an electrical circuit. The display drive source can be connected to the medium or writehead physically. The display drive source can be electrically connected to the medium or writehead directly or through some secondary connections, such as wires. The data for forming an image can be provided by a computer through wired or wireless communication with the display drive source, or directly to the writehead. The display including the display medium further includes a case. The case conceals one or more portions of the display medium from view, forming one or more view areas. The case can additionally enclose portions of one or more of the display medium, writehead, and any associated electronics, for example, a display drive source. The writehead can also be a separate device, and can write the display medium before the display medium is placed in the case, or after. The case can be any material, for example, plastic, paper, metal, ceramic, liquid, gelatin, view obstructing gas, or any combination thereof. The case can have any shape, including, but not limited to, square, rectangular, octagonal, round, cylindrical, spherical, or amorphous. The case can be two- or three-dimensional. The case can be rigid, semi-rigid, flexible, liquid, or gaseous. The case can be opaque, translucent, transparent, or have sections with varying degrees of opacity from opaque to transparent, wherein a transparent area can coincide with a view area. The view area can be a transparent portion of the case, or an opening through the case.

The view area and the medium can be moved relative to each other. The medium can be held stationary and the view area moved. When the medium is held stationary, the medium can be written by permanently attached, conventional electronics capable of writing all or a portion of the entire display, or a writehead. The writehead can move with the view area, or independently therefrom. The view area can be stationary and the medium moved past the view area to change the view area of the display. When the medium is moved, the writehead can be stationary and the medium can be written as it moves past the writehead, or the writehead can also move relative the media. The medium or view area can be moved constantly or at intervals to show updated information. The portion of the medium visible in the view area can have a single color set, or can include all or a portion of two or more color sets.

One or more driving force sources can impart relative motion between the medium and the writehead, the media and the view area, or both. Each driving force source can be incorporated into the case, the writehead, the medium, or a combination thereof. The drive force on the medium, writehead, or view area can be an external roller, belt, or wheel powered by a motor, battery, other power source, manual labor, or gravity.

One or more pieces of display medium can be combined with a writehead, drive electronics, and an optional case to form a display. The display can be an integrated unit, groups of individual components, or various combinations thereof. An integrated unit can provide a path to guide movement of the medium, view area, writehead, or any combination thereof.

The display can be understood with reference to certain embodiments including a cholesteric liquid crystal display element, as depicted in the Figures and described below.

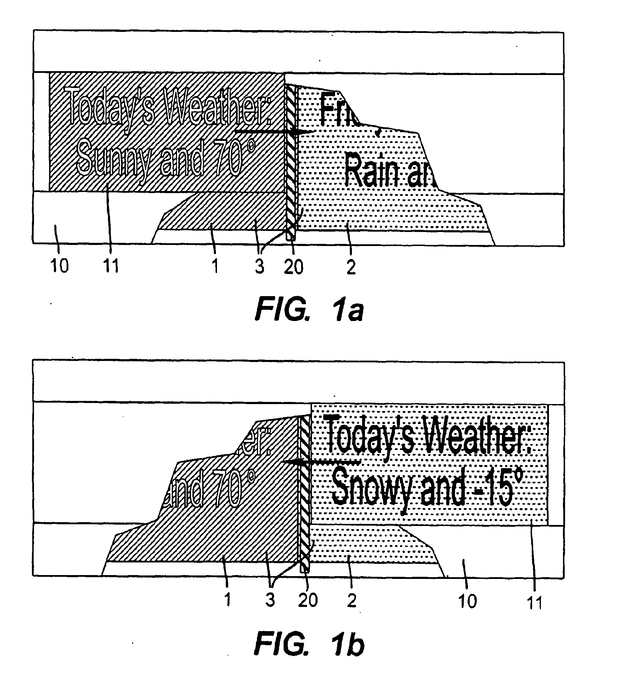

**Fig. 1a** and **1b** are front views of an electronically addressable, single-sided, reflective, color-changing display with stationary medium **3** and a movable view area **11.** In this embodiment, the medium **3** has a first colored section **1,** which features a first color set, and a second colored section **2,** which features a different color set. The two colored sections are shown as a single piece of medium, but they can be two discrete pieces. The display can be enclosed in a case **10** which has a view area **11,** through which a portion of the medium **3** can be seen. The view area **11** can be moved to display a first colored section **1,** a second colored section **2,** or any combination of the two. The display can have a writehead **20.** The writehead can be stationary, movable with the view area **11,** or movable independent of the view area **11. Fig. 1a** shows the view area **11** in a first position, in which the first colored section **1** is visible, and the second colored section **2** is hidden. The view area **11** can be moved, and the medium **3** can be updated with new information using the writehead **20. Fig. 1b** shows the view area **11** in a second position, showing the updated information on the second colored section **2** while hiding the first colored section **1**. The medium can be written before placement in a display case, and the medium and/or viewing area moved to display different portions of the pre-written media.

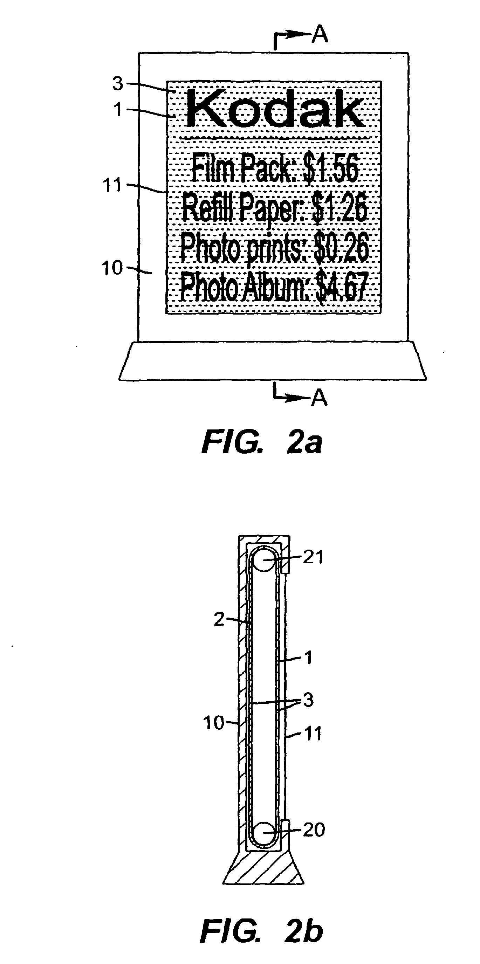

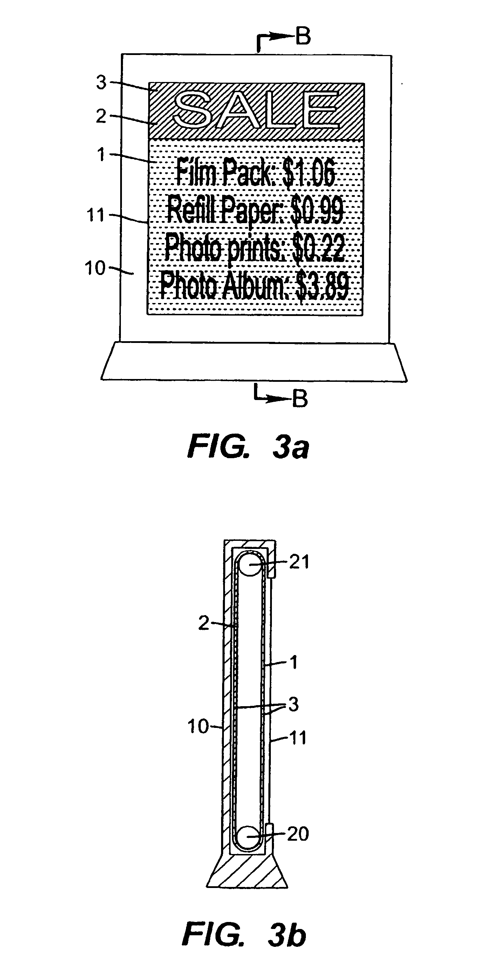

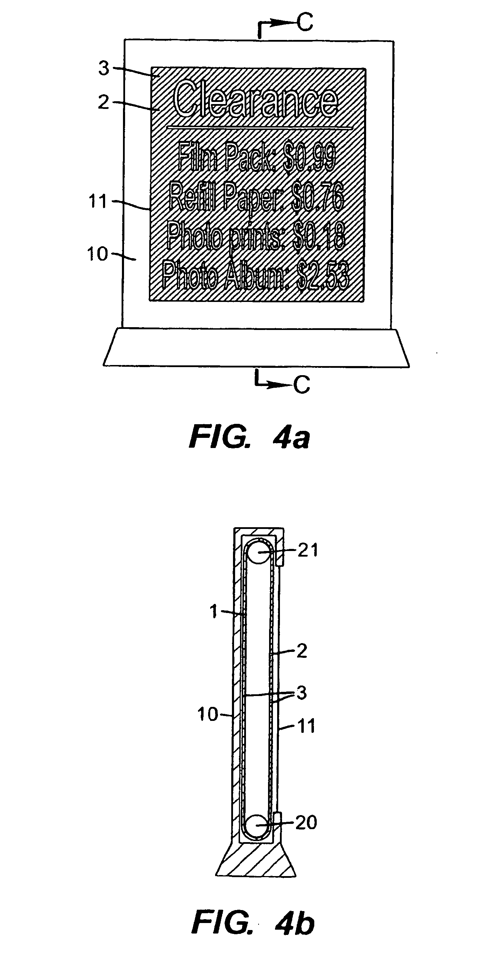

**Figs. 2a, 3a,** and **4a** are front views of a single-sided, reflective, color-changing display with a stationary view area **11** and movable medium **3. Figs. 2b, 3b,** and **4b** are cross-sections of the corresponding displays in corresponding color states. The display shown has the medium **3** configured into a loop, half of which is a first colored section **1** and the other half of which is a second colored section **2.** The medium drive mechanism **21** can be a powered roller that can control the mechanical position of the medium **3** relative to view area **11.** The drive mechanism **21** can move the medium past an electronic writehead **20,** which updates the medium **3** with a desired image. **Figs. 2a** and **2b** show the display with the medium **3** positioned in view area **11** such that only the first colored section **1** is visible. **Figs. 3a** and **3b** show the same display when the medium **3** has been positioned such that a portion of the first colored section **1** and a portion of the second colored section **2** are visible in view area **11.** **Figs. 4a** and **4b** show the display in yet another configuration, where only the second colored section **2** is visible in view area **11**. Although this embodiment shows only two color sets on the medium **3,** more can be used. The system is not limited to use of a reflective medium only. Transmissive, emissive, or transflective medias can also be used. Additionally, the display is not limited to a flat configuration. It can be curved, faceted, or have any other topography, especially where a flexible display media is used.

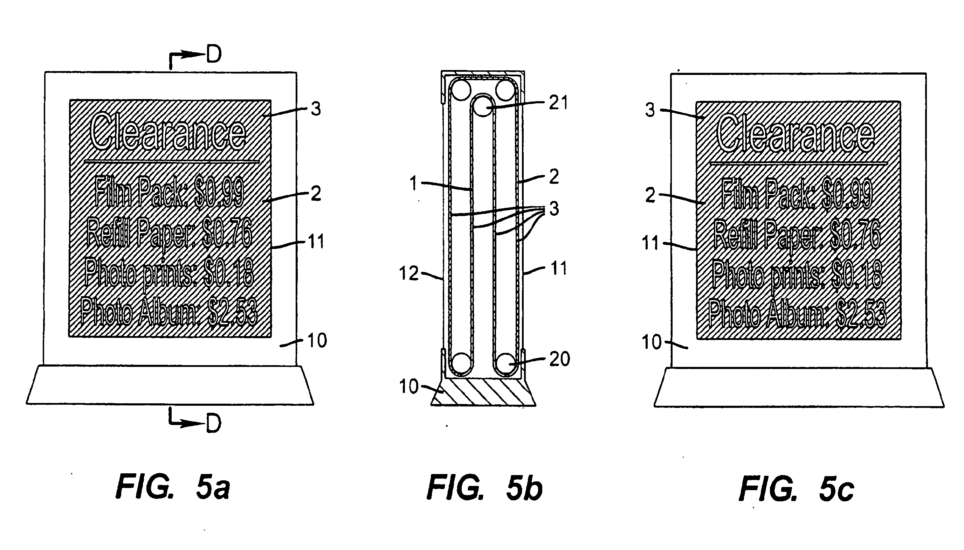

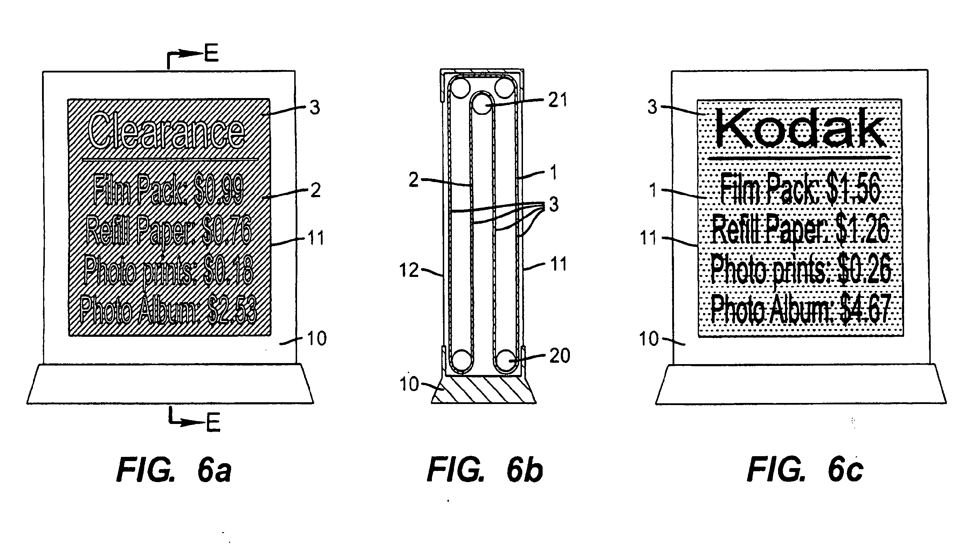

**Figs. 5a** through **6c** are assorted views of a two-sided, reflective, color-changing display with a stationary view area **11** and movable medium **3. Fig. 5a** depicts the first side of the display with a second colored section **2** visible. **Fig. 5b** is a schematic cross-section of this same display in this configuration. **Fig. 5c** depicts the second side of the display with a second colored section **2** visible. **Figs. 6a** through **6c** are of the same display, with the first colored section **1** visible from the second side of the display. As with the single-sided configuration, more than two color sets can be used and the display can have various configurations besides a flat display. Additionally, the display format can be expanded to include any number of view areas **11**. Alternate medium paths can be used to enable any portion or combination of portions of medium color sets to be visible in a given view area.

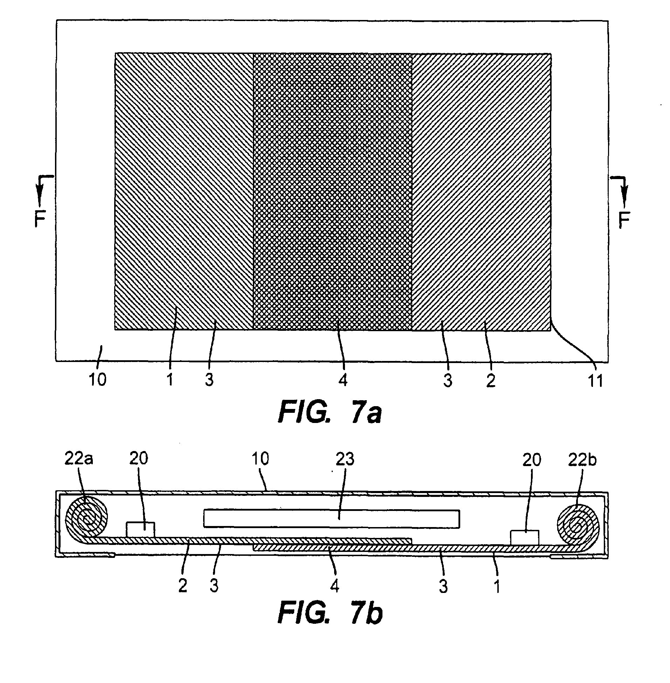

**Fig. 7a** is a front view of a one-sided, transflective, color-changing display with capability to overlap first and second colored sections **1,2** to form a third, composite color section **4. Fig. 7b** is a cross-section of this display with an optional backlight **23.** In this configuration, two pieces of medium **1** are rolled into scrolls **22,** which can be individually extended and addressed by a writehead **20.** This configuration embodies one scroll **22a** made entirely of a first color section **1,** and a second scroll **22b** made entirely of a second color section **2.** However, each scroll **22** could be divided into multiple colored sections. In the situation that at least one of the color sets is at least partially transmissive, the two scrolls **22** can be overlapped to form a third color set **3,** which is a combination of the first and second sections **1,2.** In the situation that both scrolls **22** are at least partially transmissive, an optional light source **23** can be added to increase display brightness. Two or more writeheads can be used in this configuration, wherein each medium can have a separate writehead.

Various configurations of display medium, view area, and writehead have been presented. One or more display medium piece, view area, and writehead can be combined in any manner to achieve the desired effect of a display with two or more electronically updatable color sets.

**PARTS LIST**

| | |
|---|---|
| 1 | first colored section of medium |
| 2 | second colored section of medium |
| 3 | display medium |
| 4 | third colored section of medium |
| 10 | display case |
| 11 | view area |
| 20 | electronic writehead |
| 21 | media drive mechanism |
| 22a, b | display medium scroll |
| 23 | light source |

**Claims**

1. An electronically updatable display comprising:

   an electronically updatable rewritable electronic display medium (3) comprising a bistable liquid crystal material, a support having a first conductive layer coated with the bistable liquid crystal material or having a pre-formed layer of the bistable liquid crystal material placed thereover, and a second conductive layer formed over the bistable liquid crystal material, the first and second conductive layers being arranged to apply electric fields of various intensity and duration to the bistable liquid crystal material,

   wherein:

   the first conductive layer is patterned into parallel lines; and the second conductive layer is patterned non-parallel to the patterning of the first conductive layer; or
   the second conductive layer is patterned in the form of individual pixels; or
   the second conductive layer comprises electrically conductive segments arranged to form pixels;
   such that the optical state of the bistable liquid crystal material between the first conductive layer and the second conductive layer can be changed by selectively applying an electrical drive signal across the bistable liquid crystal material,
   the electronically updatable rewritable electronic display medium (3) having two or more areas, wherein at least two areas have a different color set (1, 2); and
   a case concealing at least one portion of the display medium from view, forming at least one view area (11), wherein at least a portion of the display medium is viewable through the view area, and

   wherein the view area and the display medium are movable relative to one another, so that the perceived color of the display can be changed by changing the portion of the display medium that is visible in the view area.

2. The display of claim 1, wherein the display medium comprises two or more medium pieces, each medium piece having one or more color sets.

3. The display of claim 1, wherein the display medium comprises a loop, a scroll (22), or a sheet.

4. The display of claim 1, wherein the portion of the display medium viewable through the view area comprises a single color set.

5. The display of claim 1, wherein the portion of the display medium viewable through the view area comprises two or more color sets.

6. The display of claim 1, wherein the display comprises at least two view areas, and wherein the portion of the display medium viewable through each view area comprises the same one or more color set.

7. The display of claim 1, wherein the display comprises at least two view areas, and the portion of the display medium viewable through at least one view area comprises a different one or more color set from the display medium viewable through at least one other view area.

8. The display of claim 1, further comprising at least one light source (23) adjacent at least one portion of the display medium.

9. The display of claim 1, wherein at least a portion of the display medium is transmissive, reflective, or transparent.

10. A method of changing a display, wherein the display is in accordance with claim 1, the method comprising: moving the display medium and view area relative to one another to display at least a portion of the display medium having a different color set so that the perceived color of the display is changed by changing the portion of the display medium that is visible in the view area.

## Patentansprüche

1. Elektronisch aktualisierbare Anzeigevorrichtung mit:

    einem elektronisch aktualisierbaren, überschreibbaren elektronischen Anzeigemedium (3), das ein bistabiles Flüssigkristallmaterial, einen Träger, der eine erste leitende Schicht, die mit dem bistabilen Flüssigkristallmaterial beschichtet ist oder auf der eine im Voraus ausgebildete Schicht des bistabilen Flüssigkristallmaterials platziert ist, und eine über dem bistabilen Flüssigkristallmaterial ausgebildete zweite leitende Schicht aufweist, wobei die erste und die zweite leitende Schicht zum Aufbringen elektrischer Felder verschiedener Intensität und Dauer auf das bistabile Flüssigkristallmaterial ausgebildet sind,

    wobei:

    die erste leitende Schicht in parallelen Linien gemustert ist; und die zweite leitende Schicht nicht parallel zu der Musterung der ersten leitenden Schicht gemustert ist; oder
    die zweite leitende Schicht in Form einzelner Pixel gemustert ist; oder
    die zweite leitende Schicht elektrisch leitende Segmente aufweist, die derart angeordnet sind, dass sie Pixel bilden;
    derart, dass der optische Zustand des bistabilen Flüssigkristallmaterials zwischen der ersten leitenden Schicht und der zweiten leitenden Schicht durch selektives Anlegen eines elektrischen Steuersignals an das bistabile Flüssigkristallmaterial verändert werden kann,
    wobei das elektronisch aktualisierbare, überschreibbare elektronische Anzeigemedium (3) zwei oder mehr Bereiche hat, wobei mindestens zwei Bereiche einen unterschiedlichen Farb-Set (1, 2) aufweisen; und
    mit einem die Sicht auf mindestens einen Teil des Anzeigemediums verdeckenden Gehäuse, das mindestens einen Sichtbereich (11) bildet, wobei mindestens ein Teil des Anzeigemediums durch den Sichtbereich sichtbar ist, und
    wobei der Sichtbereich und das Anzeigemedium relativ zueinander bewegbar sind, so dass die wahrgenommene Farbe des Mediums verändert werden kann, indem der in dem Sichtbereich sichtbare Teil des Anzeigemediums verändert wird.

2. Anzeigevorrichtung nach Anspruch 1, bei der das Anzeigemedium zwei oder mehr Medium-Teile aufweist, wobei jeder Medium-Teil einen oder mehrere Farb-Sets aufweist.

3. Anzeigevorrichtung nach Anspruch 1, bei der das Anzeigemedium eine Loop-, Scroll- (22) oder Sheet-Vorrichtung aufweist.

4. Anzeigevorrichtung nach Anspruch 1, bei der der durch den Sichtbereich sichtbare Teil des Anzeigemediums einen einzigen Farb-Set aufweist.

5. Anzeigevorrichtung nach Anspruch 1, bei der der durch den Sichtbereich sichtbare Teil des Anzeigemediums zwei oder mehr Farb-Sets aufweist.

6. Anzeigevorrichtung nach Anspruch 1, wobei die Anzeigevorrichtung mindestens zwei Sichtbereiche aufweist, und bei der der durch jeden Sichtbereich sichtbare Teil des Anzeigemediums den gleiche einen Farb-Set oder die gleichen mehreren Farb-Sets aufweist.

7. Anzeigevorrichtung nach Anspruch 1, wobei die Anzeigevorrichtung mindestens zwei Sichtbereiche aufweist, und bei der der Teil des Anzeigemediums, der durch den mindestens einen Sichtbereich sichtbar ist, einen oder mehrere Farb-Sets aufweist, der bzw. die sich von dem durch mindestens einen anderen Sichtbereich sichtbaren Anzeigemedium unterscheidet bzw. unterscheiden.

8. Anzeigevorrichtung nach Anspruch 1, ferner mit mindestens einer Lichtquelle (23) nahe mindestens einem Teil des Anzeigemediums.

9. Anzeigevorrichtung nach Anspruch 1, bei der mindestens ein Teil des Anzeigemediums lichtdurchlässig, reflektierend oder transparent ist.

10. Verfahren zum Verändern einer Anzeigevorrichtung, die entsprechend Anspruch 1 ausgebildet ist, wobei das Verfahren umfasst: Bewegen des Anzeigemediums und des Sichtbereichs relativ zueinander, um mindestens einen Teil des Anzeigemediums anzuzeigen, der einen unterschiedlichen Farb-Set aufweist, so dass die wahrgenommene Farbe der Anzeige verändert wird, indem der in dem Sichtbereich sichtbare Teil des Anzeigemediums verändert wird.

## Revendications

1. Afficheur actualisable électroniquement comprenant :

un support d'affichage électronique réinscriptible actualisable électroniquement (3) comprenant un matériau bistable à cristaux liquides, un support ayant une première couche conductrice recouverte du matériau bistable à cristaux liquides ou sur laquelle une couche préformée de matériau bistable à cristaux liquides est placée, et une deuxième couche conductrice formée sur le matériau bistable à cristaux liquides, les première et deuxième couches conductrices étant conçues pour appliquer des champs électriques d'intensité et de durée diverses au matériau bistable à cristaux liquides,

dans lequel :

la première couche conductrice est imprimée en lignes parallèles ; et la deuxième couche conductrice est imprimée non parallèlement au motif de la première couche conductrice ; ou la deuxième couche conductrice est imprimée sous la forme de pixels individuels ; ou la deuxième couche conductrice comprend des segments conducteurs disposés pour former des pixels ; de sorte que l'état optique du matériau bistable à cristaux liquides entre la première couche conductrice et la deuxième couche conductrice puisse être modifié en appliquant de manière sélective un signal électrique de commande aux bornes du matériau bistable à cristaux liquides, le support d'affichage électronique réinscriptible actualisable électroniquement (3) ayant deux zones ou plus, dans lequel au moins deux zones ont un ensemble de couleurs différent (1, 2) ; et un boîtier dissimulant au moins une portion du support d'affichage à la vue, formant au moins une zone d'affichage (11), dans lequel au moins une portion du support d'affichage peut être vue par la zone d'affichage, et dans lequel la zone d'affichage et le support d'affichage peuvent être déplacés l'un par rapport à l'autre, afin que la couleur perçue de l'affichage puisse être modifiée en changeant la portion du support d'affichage qui est visible dans la zone d'affichage.

2. Afficheur selon la revendication 1, dans lequel le support d'affichage comprend deux parties de support ou plus, chaque partie de support ayant un ou plusieurs ensembles de couleurs.

3. Afficheur selon la revendication 1, dans lequel le support d'affichage comprend une boucle, une lecture en spirale (22), ou une feuille.

4. Afficheur selon la revendication 1, dans lequel la portion du support d'affichage visible par la zone d'affichage comprend un seul ensemble de couleurs.

5. Afficheur selon la revendication 1, dans lequel la portion du support d'affichage visible par la zone d'affichage comprend deux ensembles de couleurs ou plus.

6. Afficheur selon la revendication 1, dans lequel l'affichage comprend au moins deux zones d'affichage, et dans lequel la portion du support d'affichage visible par chaque zone d'affichage comprend le même ensemble de couleurs ou les mêmes ensembles de couleurs.

7. Afficheur selon la revendication 1, dans lequel l'affichage comprend au moins deux zones d'affichage, et la portion du support d'affichage visible par au moins une zone d'affichage comprend un ou plusieurs ensembles de couleurs différents du support d'affichage visible par au moins une autre zone d'affichage.

8. Afficheur selon la revendication 1, comprenant en outre au moins une source lumineuse (23) adjacente à au moins une portion du support d'affichage.

9. Afficheur selon la revendication 1, dans lequel au moins une portion du support d'affichage est transmissive, réflective, ou transparente.

10. Procédé pour changer un Afficheur, dans lequel l'afficheur est selon la revendication 1, le procédé comprenant : le déplacement du support d'affichage et d'une zone d'affichage l'un par rapport à l'autre pour afficher au moins une portion du support d'affichage ayant un ensemble de couleurs différent afin que la couleur perçue de l'affichage soit modifiée en changeant la portion du support d'affichage qui est visible dans la zone d'affichage.

**FIG. 1a**

**FIG. 1b**

**FIG. 2a**

**FIG. 2b**

**FIG. 3a**

**FIG. 3b**

**FIG. 4a**

**FIG. 4b**

**FIG. 5a**

**FIG. 5b**

**FIG. 5c**

EP 1 829 019 B1

E

3

2

11

10

Clearance

Film Pack: $0.99
Refill Paper: $0.76
Photo prints: $0.18
Photo Album: $2.53

E

**FIG. 6a**

21

2

1

3

12

11

20

10

**FIG. 6b**

3

1

11

10

Kodak

Film Pack: $1.56
Refill Paper: $1.26
Photo prints: $0.26
Photo Album: $4.67

**FIG. 6c**

**FIG. 7a**

**FIG. 7b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030071936 A
- JP 07049984 B
- US 4857908 A
- US 20040212582 A
- US 5105185 A
- US 5695682 A

- US SN10134185 A, Stephenson
- US SN10851440 A, Burberry
- US 6217792 B
- US 6099751 A
- US 65169203 A, T. Welter

**Non-patent literature cited in the description**

- **G. Gottarelli ; G. Spada.** *Mol. Cryst. Liq. Crys.,* 1985, vol. 123, 377
- **G. Spada ; G. Proni.** *Enantiomer,* 1998, vol. 3, 301

- **L. M. Blinov.** Electro-optical and Magneto-Optical Properties of Liquid Crystals. John Wiley & Sons Ltd, 1983
- **W. Herbst ; K. Hunger.** Industrial Organic Pigments: Production, Properties, Applications. Wiley Publishers, 1993